# EUROPEAN PATENT SPECIFICATION

(11) **EP 3 739 695 B1**
(45) Date of publication and mention of the grant of the patent: **11.10.2023**
(21) Application number: 19175208.8
(22) Date of filing: 17.05.2019
(51) Int. Cl.: H01R 25/16, H01R 13/05

(54) **INTERFACE REGION FOR CONNECTING A PIN-LIKE ELEMENT TO A BUSBAR, A SYSTEM INCLUDING SUCH AN INTERFACE REGION AND A METHOD FOR PRODUCING SUCH AN INTERFACE REGION**
SCHNITTSTELLENBEREICH ZUR VERBINDUNG EINES STIFTARTIGEN ELEMENTS MIT EINER SAMMELSCHIENE, SYSTEM MIT SOLCH EINEM SCHNITTSTELLENBEREICH UND VERFAHREN ZUR HERSTELLUNG SOLCH EINES SCHNITTSTELLENBEREICHS
RÉGION D'INTERFACE PERMETTANT DE CONNECTER UN ÉLÉMENT EN FORME DE BROCHE À UNE BARRE OMNIBUS, SYSTÈME COMPRENANT UNE TELLE RÉGION D'INTERFACE ET PROCÉDÉ DE PRODUCTION D'UNE TELLE RÉGION D'INTERFACE

(43) Date of publication of application: 18.11.2020
(73) Proprietor: Rogers BV, 9940 Evergem (BE)
(72) Inventor: Yang, Jianning, Suzhou, 215122 (CN); Tang, Liang, Suzhou 215122 (CN); Fang, Hua, Suzhou 215122 (CN); Feng, Zhou, Suzhou 215122 (CN)
(74) Representative: Müller Schupfner & Partner Patent- und Rechtsanwaltspartnerschaft mbB

(56) References cited:
- EP-A2- 1 087 300
- JP-A- H07 106 001
- US-A- 4 134 633

## Description

The present invention concerns an interface region for connecting a pin-like element to a busbar, in particular a system including such an interface region and a method for producing such an interface region.

It is well known to realize an electric connection to a printed circuit board via a press fit connector that can be plugged into a corresponding recess in the printed circuit board. Such a recess, for example, forms an interface region for a pin-like element. Typically, the press fit connector includes at least one pin-like element, preferably a plurality of pin like elements arranged in a certain pattern, which can be inserted into the recess and is fixed to the printed circuit board in a force fitting manner.

Further, the state of the art knows busbars that are formed by at least one metal layer, being preferably mainly unstructured, for collecting and distributing electrical power, for example in an electric vehicle. Such a busbar forms a carrier for several electrical components, in particular connectors or capacitors, which can be arranged on a top side of the busbar. Typically, such busbars extend in a main extension plane and have a thickness, measured in a direction perpendicular to the main extension plane, of at least 1.5 mm. For providing an interface region being able to receive pin-like elements, it is further known to use a thick printed circuit board (PCB), being connected to the busbar as an adapter, since it is difficult to realize suitable recesses, in particular small pitches and small diameters of the recesses, in a thick busbar configured for properly fixing the thin pin-like elements of a plug element. However, such thick PCBs do not withstand the typical electrical power in an interface region of the busbar and are prone to errors, when thin pin-like elements are introduced in the corresponding recesses.

Moreover, DE 10 2016 206 234 A1 deals with a busbar for an inverter, wherein a press-fit connector is directly connected to a recess incorporated into the busbar at one end and to a plurality of printed circuit boards at another end.

US 4,134,633 discloses a sandwiched, fully insulated busbar having an insulation free through contact aperture. EP 1 087 300 A2 concerns a busbar assembly that includes a plurality of busbars.

Considering the above, it is an object of the present invention to provide an improved system comprising an interface region for connecting a pin-like element to a thick busbar, in particular in view of high currents that passes the interface region.

This object is achieved by a system according to claim 1 and a method according to claim 14.

Preferred embodiments are incorporated in the dependent claims, the description and the figures.

Contrary to the state of the art, an interface region is formed by a plurality of metal layers, being stacked above each other. In particular, it turned out that using a plurality of metal layers being stacked above each other realizes an interface region that can even withstand high currents that might occur during operation of the arrangement including the interface region. Furthermore, it is possible to avoid thick printed circuit boards that would be used otherwise as an interface region for the busbar. Instead, the plurality of metal layers, being stacked, is arranged on a top side of the busbar and the plurality of metal layer forms an adapter that can be used for directly connecting the at least one pin-like element to the busbar. Further, providing a recess, which is part of several metal layers, being stacked above each other, simplifies the production of the recesses and the handling, i. e. the plug-in mechanism, during connection, compared to recesses been formed in a massive or monolithic metal block, i. e. the busbar according to the present invention. In accordance with the invention, the plug-in direction extends parallel to the stacking direction.

Preferably, the busbar is a flat product extending in a main extension plane. The term "flat" means that a thickness of the busbar, measured in a direction perpendicular to the main extension plane, is at least 10 times, preferably at least 15 times, smaller than the extensions across the busbar in a plane parallel to the main extension plane. For instance, the busbar is laminated and/or covered with an insulation layer. It is also provided that the busbar comprises at least one first conductive layer and/or at least a second conductive layer that are separated from each other by a further insulation layer, wherein the at least first conductive layer, the at least second conductive layer and the further insulation layer are stacked above each other in the stacking direction, being perpendicular to the main extension plane. Such busbars are particularly intended for collecting and transferring electrical power. For example, a plurality of capacitors is arranged on top of the busbar and are connected to the busbar for distributing a total power collected from a plurality of capacitors. Such busbars are intended for being used in electrical vehicles, for example. Preferably, the at least one first conductive layer and/or the at least second conductive layer is made from a metal, such as copper, steel or aluminium. In particular, the thickness of the busbar, measured in a direction perpendicular to the main extension plane, is between 0.5 mm and 6 mm, more preferably between 0.5 mm and 2 mm or between 4.5 and 5.5 mm.

Furthermore, it is provided that a first thickness and/or a number of the metal layers of the plurality of metal layers is adapted to the application, the busbar is intended for. The number of metal layers and/or their first thickness can be particularly adapted to the currents that are expected in the interface region.

In particular, it is provided that the at least one recess, formed by the plurality of metal layers, has an extension, measured in a direction parallel to the main extension plane, which is smaller than 2 mm, more preferably smaller than 1.5 mm and most preferably smaller than 1 mm. Thus, the fine and thin structured recesses are provided. Such fine and thin structures can be more easily realized by stacking several metal layers, each having at least one hole, above each other, instead of realizing the recess in a monolithic or massive metal block that could be used otherwise as adapter between the busbar and the plug element. Further, it turned out that the success rate of plugging thin and fine structured pin-like elements into the recesses, described above, can be improved by forming the recesses by a plurality of metal layers.

Preferably, it is provided that the at least one pin-like element is a press-fit element or part of a press-fit element. In particular, the press-fit element is part of a plug-element having several pin-like elements and/or press-fit element, which, for example are arranged in several rows, wherein at least two pin-like elements being arranged next to each other in one row. Furthermore, it is provided that the pin-like element or the press-fit element have a solid press-in zone or an elastic press-in zone. Especially, this solid press-in zone or elastic press-in zone cause the connection to an inner surface of the recess in a force fitting manner, when the pin-like element is inserted into the recess in the mounted state. By the connection of a pin-like element to the recess in the force fitting manner, the pin-like element, in particular the press-fit element, is fixed to the interface region and consequently directly to the busbar. In particular, the connection between the pin-like element and the busbar is reversible.

According to a preferred embodiment it is provided that a first length of at least one recess, measured along the stacking direction, is larger than a second length of a part of the pin-like element, being inserted into the recess in the mounted state. As a consequence, a cavity is formed between a front end of the pin-like element and a bottom of the recess and/or the top side of the busbar. Such a cavity avoids a direct contact of the front end of the at least one pin-like element and the top side of the busbar and forces the currents to pass the plurality of metal sheets and consequently supports a homogeneously distribution of the current in the interface region.

In particular, it is provided that the plurality of metal layers is enclosed in a casing. Particularly, the casing and the busbar share a common casing that surrounds both the busbar and the plurality of metal layers. Such a casing protects the plurality of metal layers. For example, the casing is made from plastic. Furthermore, the casing includes openings that allow access to the recesses incorporated in the plurality of metal layers.

In particular, it is provided that a first thickness of a single metal layer of the plurality of metal layers is 0.1 to 0.8 times, preferably 0.2 to 0.6 times and most preferably between 0.4 and 0.5 times smaller than a second thickness of the busbar. That means: the single metal layers are thinner than the busbar and as a consequence the high currents, being provided by the busbar, are divided into several currents in the single metal layers that form the plurality of metal layers. Preferably, the first thickness is between 250 µm and 5 mm, more preferably between 350 µm and 2.5 mm and most preferably between 0.5 mm and 1 mm.

Further, the third thickness of the plurality of metal layers needs to be restricted in order to realize a compact design of the interface region, which allows using the busbar having the interface region in several applications. Preferably, the first thickness is between 0.8 mm and 10 mm, more preferably between 1.2 mm and 8 mm and most preferably between 1.5 mm and 5 mm.

In another embodiment of the present invention, it is provided that the plurality of metal layers comprises 3 to 25 metal layers, preferably 4 to 15 metal layers and more preferably 5 to 10 metal layers. By increasing the number metal layers that are stacked above each other, it is possible to simplify realizing the holes in the individual metal layer, since the metal layers can be realized such thin that producing the holes is significantly simplified. On the other hand, the number of metal layers has to be restricted, since the probability of a misalignment between the metal layers during production increase. Thus, limiting the number of metal layers reduce the probability of providing a recess that cannot be used in practise. It turned out that by choosing 5 to 10 metal layers, guarantees a simplified handling during the production and can be used in most of the application.

In particular, it is provided that the metal layers of the plurality of metals layers, at least a subset of the metal layer of the plurality of metal layers, have the same first thickness or differ from each other regarding their first thickness. Especially, it is provided to adapt the first thickness and/or number of metal layers to the certain application, for which the busbar is intended. By such an individualisation it is possible to optimize the current, flowing through the interface region, for avoiding damages in operation. Thus, it is advantageously possible to increase the durability of the interface region.

Especially, it is provided that at least two metal layers of the plurality of metal layers have different openings for forming the recess. For example, it is possible to choose an opening of the metal layer, which is next to the busbar, larger than the opening of the metal layer, which is arranged at a top of the plurality of the metal layers, in particular being faced away from the top side of the busbar. Particularly, the metal layer, being adjacent to the busbar, does not need to contact the pin-like element laterally. Therefore, the opening can be chosen larger as the other openings forming a part of the recess configured for establishing force fitting interaction between the pin-like element and the recess in the mounted state. Preferably, the number of metal layers of the plurality of metal layers, being in contact with the pin-like element in the mounted state, can be adapted in view of the specific application, the busbar is intended for.

According to a preferred embodiment, it is provided that at least one recess reaches through a number of metal layers, being bigger than a half of a total number of metal layers included in the plurality of metal layers. By increasing the number of metal layers that form recesses it is advantageously possible to increase the number of metal layers that contacts the pin-like element laterally. Preferably, the at least one recess reaches to all metal layers such that the recess extends until the top surface of the busbar. Especially, by increasing the number of metal layers which forms the recess, also the number of metal layers, being in contact with the pin-like elements, is increased. As consequence, it is possible to distribute the current to several metal layers for avoiding to concentrate currents in specific areas of the interface region. As the consequence the probability for damages is reduced.

Another aspect of the present invention is a system, in particular for reversible connecting the pin-like element to the busbar, wherein in a mounted state at least a part of the at least one pin-like element is inserted into the recess and is fixed in the recess in a force fitting manner. All the features and benefits described above, regarding the interface region applies analogously to the system, including the busbar and the at least one pin-like element, and vice versa.

In particular, it is provided that the pin-like element is part of a press-fit element, interacting with the recess in a force fitting manner in the mounted state. Especially, a cross section of the recess, formed by several holes of different metal layers, is adapted to a cross section of the pin-like element such that the press-fit element interacts in a force fitting manner with an inside of the recess. Thus, the plug-element is connected and fixed directly to the busbar.

In particular, it is provided that the pin-like element, being inserted in the recess, contacts all metal layers of the plurality of metal layers. As a consequence, it is possible to distribute the current of the busbar in the interface region to all metal layers and as a result, it is avoided to concentrate the current into a certain region of the interface region. Therefore, a probability for damages in the interface region can be reduced.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- Fig. 1: schematically shows an interface region according to a preferred embodiment of the present invention and
- Fig.2: a connector intended for the interface region.

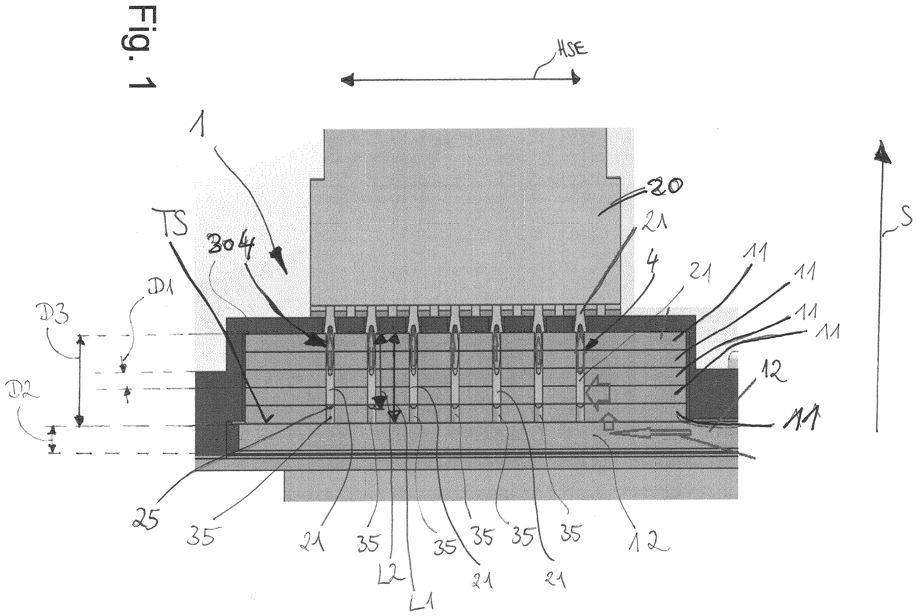

In **Figure 1** an interface region 1 for connecting a pin-like element 21 to a busbar 12 according to a preferred embodiment of the present invention is shown. Such busbars 12 are intended for collecting and distributing electrical power of an arrangement of electric components, in particular for a plurality of capacitors, which are arranged on top of the busbar 12 (not shown). The busbar 12, extending in a main extending plane HSE preferably forms a carrier for the electrical components (not shown here) that are directly arranged on the busbar 1. Preferably, a first conductive layer of the busbar 12 might be covered by an isolation layer (not shown), which allows arranging the capacitors directly on the first conductive layer. Especially, the busbar 12 comprises a first conductive layer extending in the main extending plane HSE and has a port, in particular extending in a direction parallel to the main extending plane HSE from an outer periphery of the first conductive layer, for representing a common pole of the busbar 12 that collects the contributions of several first kind of poles that are each assigned to several connectors or capacitors.

Besides the first conductive layer, a second conductive layer is provided, wherein the second conductive layer extends parallel to the first conductive layer. The busbar 12, in particular the first conductive layer and/or the second layer, form a flat or laminated product, i. e. the extension of the busbar 12 in the main extending plane HSE is several times larger than the thickness of the busbar 12 measured in a direction perpendicular to the main extending plane HSE. Especially, the first conductive layer and the second conductive layer are made from a metal, such as copper, and aluminium, and have, for example, a thickness between 0.5 mm and 5 mm, preferably between 0.75 and 2 mm and more preferably between 1 and 1.5 mm. Further, the second conductive layer comprises at is outer periphery another port for representing a common pole of the busbar 12 that collects the contributions of a second kind of poles that are each assigning to one of the several connectors. Those busbars 12 are used, for example, in vehicles driven by electrical motors.

The present invention concerns the interface region 1 for connecting a plug-element 20, comprising at least one pin-like element 21, to the busbar 12, for directly connecting the plug-element 20 to the busbar 12. In particular, Figure 1 shows an interface region 1 for connecting the pin-like element 21 to the busbar 12. Especially, it is provided to realize a direct connection to the busbar 12 via the interface region 1, wherein the pin-like element 21 is plugged into the interface region 1 in a mounted state. Preferably, the pin-like element 21 is part of the plug element 20 and is preferably configured as a press-fit connector or press-fit element. Moreover, the plug element 20 comprises a plurality of pin-like elements 21. For example, the plug element 20 comprises several pin-like elements 21 that are arranged in two or more rows next to each other. In the mounted state, the pin-like elements 21 are plugged into corresponding recesses 4 forming the interface region 1 between the busbar 12 and the plug element 20.

In accordance with the invention, it is provided that the interface region 1 is formed by a plurality of metal layers 11, being stacked above each other along a stacking direction S. The stacking direction S particularly extends perpendicular to the main extension plane HSE and corresponds to a plug-in direction for inserting the pin-like element 21 into the recess 4. Thereby, the plurality of metal layers 11 is arranged on a top side TS of the busbar 12 and, in particular, is directly bonded to the top side TS of the busbar 12. Furthermore, it is provided that each of the metal layers 11, or at least a subset of the metal layers 11 of the plurality of metal layers 11, has at least one hole and the metal layers 11 are arranged such above each other that the at least one holes of the metal layers 11, being stacked above each other, form the recess 4 for the pin-like element 21. The recess 4, formed by the metal layers 11 which includes at least one hole and are stacked above each other, are preferably configured and dimensioned such that the pin-like element 21 interacts with the recesses in a force fitting manner in the mounted state, for reversible fixing the pin-like element 21 to the recess 4 and consequently to the interface region 1.

Especially, the metal layers 11 have a first thickness D1, measured along the stacking direction S, and the plurality of the metal layers 11 being stack above each other has a third thickness D3, measured along the stacking direction S. Preferably, the plurality of metal layers 11 is formed by 3 to 25 metal layers. In the present embodiment, illustrated in figure 1, the plurality of metal layers 11 comprises five metal layers 11, having the same first thickness D1. Especially, the first thickness D1 of a single metal layer 11 is 0.1 to 0.8 times preferably 0.2 to 0.6 times and most preferably between 0.4 and 0.5 smaller than a second thickness D2 of the busbar 12, measured in a direction perpendicular to the main extension plane HSE. Furthermore, it is provided that a third thickness D3 of the plurality of metal layers 11 is 2 to 15 times preferably 3 to 10 and most preferably 4 to 8 time thicker than the second thickness D2 of the busbar 12. The interface region 1 formed by the plurality of metal layers 11 being stacked above each other realize an adapter for directly connecting the pin-like element 21, in particular pin-like elements 21 being a press-fit element of a plug element 20, to the busbar 12. Especially, realizing the interface region 1 by several metal layers 11 allows distributing the currents such that damages at the interface region 1 can avoided, even if high currents occur in operation.

Furthermore, it is provided that the recess 4 for receiving the pin-like element 21 has a first length L1 and the part of the pin-like element 21, being inserted into the recess 4, has a second length L2, wherein the second length L2 is smaller than the first length L1, such that a cavity 35 is formed between the busbar 12 and a front end 25 of the pin-like element 21, when the pin-like element 21 is inserted into the recess 4 in the mounted state. As a consequence, the front end 25 of the pin-like element 21 does not contact the busbar 12. Thus, the current, which passes the interface region 1 in the mounted state and which is provided by the busbar 12, needs to pass the plurality of metal layers 11 for entering the pin-like element 21, especially in a lateral way. This allows distributing the current such that even high currents can be handled the interface region 1, without damaging the interface region 1.

Furthermore, a casing 30 is provided, wherein the casing 30 covers the plurality of metal layers 11 and/or the busbar 12. In particular, the casing 30 has openings, adapted such that the pin-like elements 21 can reach through the opening for accessing the recesses 4 of the plurality of metal layers 11.

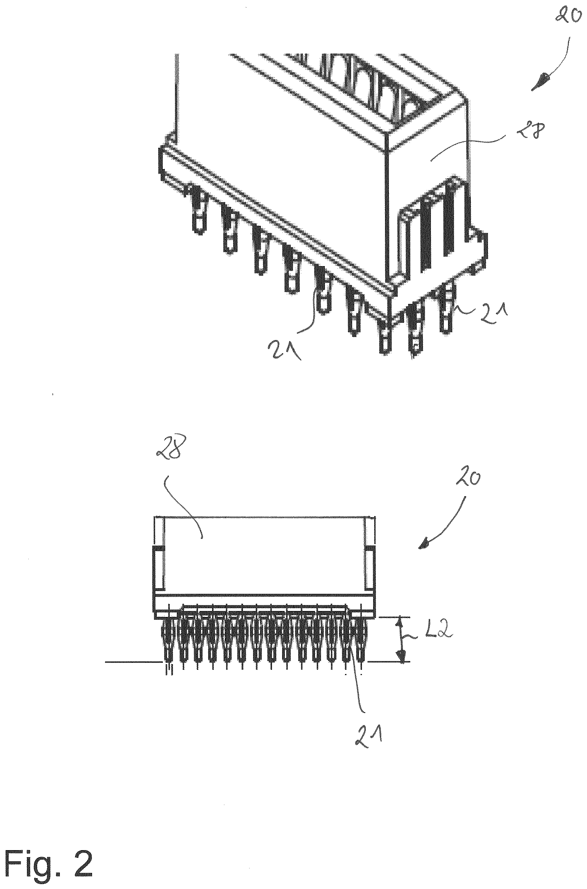

In **Figure 2** a plug element 20 is shown in a perspective view (top) and a cross sectional view (bottom). In particular, the pin-like elements 21 protrude from a bottoms side of a housing 28 of the plug element 20. Especially, the pin-like element 21, protruding from the bottom side of the plug element 20 has a second length L2 between 3 to 10 mm, more preferably a second length L2 of about 5 mm. Furthermore, a distance between two pin-like elements 21 being arranged next to each other lies between 1 and 2 mm, measured in a direction parallel to the main extension plane HSE. Consequently, a fine structure of pin-like elements 21 on the bottoms side of the plug-element 20 is provided and it turned out, that such thin and fine structured pin-like elements 21 require recesses 4 that are difficult to realize in an massive or monolithic metal block and/or in printed circuit boards, which have a thickness of more than 6 mm and could otherwise be used as an adapter between the busbar 12 and the plug-element 20. Therefore, the interface region 1, shown in Figure 1, also has the benefit of simplifying the manufacturing process for providing recesses 4 that allows plugging the pin-like elements 21 into the recesses 4 formed by the stacked metal layers 11 of the plurality of metal layers 11. Simplification is particularly guaranteed, since it is easier to realize holes in thin metal layers and to arrange them in a stacked manner for forming the plurality of metal layers 11 having corresponding recesses 4, instead of realizing the recesses 4 in a metal block being monolithic or massive.

### Reference signs:

- 1: interface region
- 4: recess
- 11: metal layer
- 12: busbar
- 20: plug element
- 21: pin-like element
- 25: front end
- 28: housing
- 30: casing
- 35: cavity
- L1: first length
- L2: second length
- D1: first thickness
- D2: second thickness
- D3: third thickness
- TS: top side
- HSE: main extension plane
- 5: Stacking direction

## Claims

1. A system comprising a busbar (12), at least one pin-like element (21) and an interface region (1) for electrically connecting at least one pin-like element (21) to the busbar (12) via the interface region (1), the busbar extending along a main extension plane (HSE) and the interface region (1) comprising:
- at least one recess (4) for receiving the at least one pin-like element (21) by a movement along a plug-in direction and
- a plurality of metal layers (11), being stacked above each other along a stacking direction (S),
wherein the stacking direction extends perpendicular to the main extension plane (HSE) and corresponds to the plug-in direction for inserting the pin-like element (21) into the at least one recess (4), the busbar (12) being formed as a massive metal block,
wherein the at least one recess (4) reaches through at least two metal layers (11) of the plurality of metal layers (11),
**characterized in that**
the plurality of metal layers (11) is arranged on the busbar (12).

2. The system according to claim 1, wherein the at least one recess (4), formed by the plurality of metal layers (11), has an extension, measured in a direction parallel to the main extension plane (HSE), which is smaller than 2 mm, more preferably smaller than 1.5 mm and most preferably smaller than 1 mm.

3. The system according to one of the preceding claims, wherein the at least one pin-like element (21) is a press-fit element or part of a press-fit element.

4. The system according to one of the preceding claims, wherein a first length (L1) of the at least one recess (4) is larger than a second length (L2) of a part of the at least one pin-like element (21), being inserted into the recess (4) in a mounted state.

5. The system according to one of the preceding claims, wherein the plurality of metal layers (11) is enclosed in a casing (30).

6. The system according to one of the preceding claims, wherein a first thickness (D1) of a single metal layer (11) of the plurality of metal layers (11) is 0.1 to 0.8 times, preferably 0.2 to 0.6 times and most preferably between 0.4 and 0.5 times smaller than a second thickness (D2) of the busbar (12).

7. The system according to one of the preceding claims, wherein the plurality of metal layers (11) comprises 3 to 25 metal layers (11), preferably 4 to 15 metal layers (11) and most preferably 5 to 10 metal layers (11).

8. The system according to one of the preceding claims, wherein metal layers (11) of the plurality of metals layers (11) have the same first thickness (D1) or differ from each other regarding their first thickness (D1).

9. The system according of to one of the preceding claims, wherein at least two metal layers (11) of the plurality of metal layers (11) have different opening sizes for forming the recess (4).

10. The system according to one of the preceding claims, wherein the at least one recess (4) reaches through a number of metal layers (11), being bigger than a half of a total number of metal layers (11) included in the plurality of metal layers (11).

11. The system according to one of the preceding claims, for reversible connecting the pin-like element (21) to the busbar (12), wherein in a mounted state at least a part of the at least one pin-like element (21) is inserted into the recess (4) and is fixed in the recess (4) in a force fitting manner.

12. The system according to claim 11, wherein in the mounted state a front end (25) of the pin-like element (21) is spaced from a bottom of the recess (4) in the mounted state of the pin-like element (21).

13. The system according to one of the claims 11 and 12, wherein the pin-like element (11), being inserted in the recess (4), contacts all metal layers (11) of the plurality of metal layers (11).

14. A method for producing a system according to one of the claims 1 to 10, comprising
- providing the plurality of metal layers (11),
- realizing at least one hole in at least a subset of the metal layers (11) of the plurality of metal layers (11)
- stacking the metal layers (11) for forming the plurality of metal layers (11) including the recess (4) and
- arranging the plurality of metal layers (11) to a top side (TS) of the busbar (12).

## Patentansprüche

1. Ein System umfassend eine Stromsammelschiene (12), mindestens ein stiftförmiges Element (21) und einen Schnittstellenbereich (1) zur elektrischen Verbindung des mindestens einen stiftförmigen Elements (21) mit der Stromsammelschiene (12) über den Schnittstellenbereich (1), wobei sich die Stromsammelschiene entlang einer Haupterstreckungsebene (HSE) erstreckt und der Schnittstellenbereich (1) umfasst:
- mindestens eine Vertiefung (4) zur Aufnahme des mindestens einen stiftförmigen Elements (21) durch eine Bewegung entlang einer Steckrichtung und
- eine Vielzahl von Metalllagen (11), die entlang einer Stapelrichtung (S) übereinander gestapelt sind, wobei die Stapelrichtung senkrecht zur Haupterstreckungsebene (HSE) verläuft und der Steckrichtung zum Einsetzen des stiftförmigen Elements (21) in die mindestens eine Vertiefung (4) entspricht, wobei die Stromsammelschiene (12) als massiver Metallblock ausgebildet ist,
wobei die mindestens eine Vertiefung (4) mindestens zwei Metalllagen (11) der Mehrzahl von Metalllagen (11) durchgreift, **dadurch gekennzeichnet, dass** die Mehrzahl von Metalllagen (11) auf der Stromsammelschiene (12) angeordnet ist.

2. System nach Anspruch 1, wobei die mindestens eine Vertiefung (4), die durch die mehreren Metalllagen (11) gebildet wird, eine Ausdehnung, gemessen in einer Richtung parallel zur Haupterstreckungsebene (HSE), aufweist, die kleiner als 2 mm, bevorzugt kleiner als 1,5 mm und besonders bevorzugt kleiner als 1 mm ist.

3. System nach einem der vorherigen Ansprüche, wobei das mindestens eine stiftförmige Element (21) ein Presspasselement oder ein Teil eines Presspasselements ist.

4. System nach einem der vorherigen Ansprüche, wobei eine erste Länge (L1) der mindestens einen Vertiefung (4) größer ist als eine zweite Länge (L2) eines Teils des mindestens einen stiftförmigen Elements (21), das im montierten Zustand in die Vertiefung (4) eingesetzt ist.

5. System nach einem der vorherigen Ansprüche, wobei die Mehrzahl der Metalllagen (11) von einem Gehäuse (30) umschlossen ist.

6. System nach einem der vorherigen Ansprüche, wobei eine erste Dicke (D1) einer einzelnen Metalllage (11) der Vielzahl von Metalllagen (11) 0,1 bis 0,8 mal, bevorzugt 0,2 bis 0,6 mal und besonders bevorzugt zwischen 0,4 und 0,5 mal kleiner ist als eine zweite Dicke (D2) der Stromsammelschiene (12).

7. System nach einem der vorherigen Ansprüche, wobei die Mehrzahl der Metalllagen (11) 3 bis 25 Metalllagen (11), bevorzugt 4 bis 15 Metalllagen (11) und besonders bevorzugt 5 bis 10 Metalllagen (11) umfasst.

8. System nach einem der vorhergehenden Ansprüche, wobei die Metalllagen (11) der Vielzahl von Metalllagen (11) die gleiche erste Dicke (D1) aufweisen oder sich in ihrer ersten Dicke (D1) voneinander unterscheiden.

9. System nach einem der vorherigen Ansprüche, wobei mindestens zwei Metalllagen (11) der Vielzahl von Metalllagen (11) unterschiedliche Größen für die Öffnungen zur Bildung der Vertiefung (4) aufweisen.

10. System nach einem der vorherigen Ansprüche, wobei die mindestens eine Vertiefung (4) durch eine Anzahl von Metalllagen (11) hindurchreicht, die größer ist als die Hälfte der Gesamtzahl der Metalllagen (11), die in der Vielzahl der Metalllagen (11) enthalten sind.

11. System nach einem der vorherigen Ansprüche zum reversiblen Verbinden des stiftförmigen Elements (21) mit der Stromsammelschiene (12), wobei in einem montierten Zustand mindestens ein Teil des mindestens einen stiftförmigen Elements (21) in die Vertiefung (4) eingesetzt und in der Vertiefung (4) kraftschlüssig fixiert ist.

12. System nach Anspruch 11, wobei im montierten Zustand des stiftförmigen Elements (21) ein vorderes Ende (25) des stiftförmigen Elements (21) von einem Boden der Vertiefung (4) beabstandet ist.

13. System nach einem der Ansprüche 11 und 12, wobei das stiftförmige Element (11), dass in die Vertiefung (4) eingesetzt ist, alle Metalllagen (11) der Vielzahl von Metalllagen (11) berührt.

14. Verfahren zur Herstellung eines Systems nach einem der Ansprüche 1 bis 10, umfassend
- Bereitstellen der Mehrzahl von Metalllagen (11),
- Herstellen mindestens eines Lochs in mindestens einer Teilmenge der Metalllagen (11) der Vielzahl von Metalllagen (11)
- Stapeln der Metalllagen (11) zum Bilden der Mehrzahl von Metalllagen (11) einschließlich der Vertiefung (4) und
- Anordnen der Vielzahl von Metalllagen (11) an einer Oberseite (TS) der Stromsammelschiene (12).

## Revendications

1. Système comprenant une barre omnibus (12), au moins un élément en forme de broche (21) et une zone d'interface (1) pour connecter électriquement au moins un élément en forme de broche (21) à la barre omnibus (12) via la zone d'interface (1), la barre omnibus s'étendant le long d'un plan d'extension principale (HSE), et la zone d'interface (1) comprenant :
- au moins un évidement (4) destiné à recevoir ledit au moins un élément en forme de broche (21) par un mouvement le long d'une direction d'enfichage, et
- une pluralité de couches métalliques (11) empilées les unes sur les autres le long d'une direction d'empilage (S),
dans lequel
la direction d'empilage s'étend perpendiculairement au plan d'extension principale (HSE) et correspond à la direction d'enfichage pour l'insertion de l'élément en forme de broche (21) dans ledit au moins un évidement (4), la barre omnibus (12) étant formée d'un bloc de métal massif,
ledit au moins un évidement (4) traverse au moins deux couches métalliques (11) de la pluralité de couches métalliques (11),
**caractérisé en ce que**
la pluralité de couches métalliques (11) est disposée sur la barre omnibus (12).

2. Système selon la revendication 1,
dans lequel ledit au moins un évidement (4) formé par la pluralité de couches métalliques (11) a une extension, mesurée dans une direction parallèle au plan d'extension principale (HSE), qui est inférieure à 2 mm, de préférence inférieure à 1,5 mm et de manière particulièrement préférée inférieure à 1 mm.

3. Système selon l'une des revendications précédentes,
dans lequel ledit au moins un élément en forme de broche (21) est un élément emmanché par pression ou une partie d'un élément emmanché par pression.

4. Système selon l'une des revendications précédentes,
dans lequel une première longueur (L1) dudit au moins un évidement (4) est supérieure à une deuxième longueur (L2) d'une partie dudit au moins un élément en forme de broche (21), insérée dans l'évidement (4) à l'état monté.

5. Système selon l'une des revendications précédentes,
dans lequel la pluralité de couches métalliques (11) est enfermée dans un boîtier (30).

6. Système selon l'une des revendications précédentes,
dans lequel une première épaisseur (D1) d'une seule couche métallique (11) de la pluralité de couches métalliques (11) est de 0,1 à 0,8 fois, de préférence de 0,2 à 0,6 fois et de manière particulièrement préférée entre 0,4 et 0,5 fois plus petite qu'une deuxième épaisseur (D2) de la barre omnibus (12).

7. Système selon l'une des revendications précédentes,
dans lequel la pluralité de couches métalliques (11) comprend 3 à 25 couches métalliques (11), de préférence 4 à 15 couches métalliques (11) et de manière particulièrement préférée 5 à 10 couches métalliques (11).

8. Système selon l'une des revendications précédentes,
dans lequel les couches métalliques (11) de la pluralité de couches métalliques (11) ont la même première épaisseur (D1) ou diffèrent les unes des autres en ce qui concerne leur première épaisseur (D1).

9. Système selon l'une des revendications précédentes,
dans lequel au moins deux couches métalliques (11) de la pluralité de couches métalliques (11) ont des tailles d'ouverture différentes pour former l'évidement (4).

10. Système selon l'une des revendications précédentes,
dans lequel ledit au moins un évidement (4) traverse un nombre de couches métalliques (11) supérieur à la moitié du nombre total de couches métalliques (11) comprises dans la pluralité de couches métalliques (11).

11. Système selon l'une des revendications précédentes, destiné à la connexion réversible de l'élément en forme de broche (21) à la barre omnibus (12),
dans lequel, à l'état monté, au moins une partie dudit au moins un élément en forme de broche (21) est insérée dans l'évidement (4) et est fixée dans l'évidement (4) par coopération de force.

12. Système selon la revendication 11,
dans lequel, à l'état monté, une extrémité avant (25) de l'élément en forme de broche (21) est espacée du fond de l'évidement (4) à l'état monté de l'élément en forme de broche (21).

13. Système selon l'une des revendications 11 et 12,
dans lequel l'élément en forme de broche (11), inséré dans l'évidement (4), vient en contact avec toutes les couches métalliques (11) de la pluralité de couches métalliques (11).

14. Procédé de fabrication d'un système selon l'une des revendications 1 à 10, consistant à
- fournir la pluralité de couches métalliques (11),
- réaliser au moins un trou dans au moins un sous-ensemble des couches métalliques (11) de la pluralité de couches métalliques (11),
- empiler les couches métalliques (11) pour former la pluralité de couches métalliques (11) incluant l'évidement (4), et
- disposer la pluralité de couches métalliques (11) sur une face supérieure (TS) de la barre omnibus (12).
